(19) Europäisches Patentamt / European Patent Office / Office européen des brevets

(11) **EP 4 744 937 A1**

(12) **EUROPEAN PATENT APPLICATION**

(43) Date of publication:
**20.05.2026 Bulletin 2026/21**

(21) Application number: **25211535.7**

(22) Date of filing: **28.10.2025**

(51) International Patent Classification (IPC):
**B60L 3/08** (2006.01)    **B60L 3/10** (2006.01)
**B60L 15/10** (2006.01)    **B60L 15/20** (2006.01)
**B60L 50/60** (2019.01)    **B62D 11/04** (2006.01)

(52) Cooperative Patent Classification (CPC):
**B60L 3/08; A01D 69/02; B60K 1/00; B60K 1/02;
B60K 1/04; B60L 3/10; B60L 15/10; B60L 15/20;
B60L 50/60; B60W 50/08; B62D 11/003;
B62D 11/005; B62D 11/04; B62D 11/24;
G05G 1/04;**                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.11.2024 CN 202411632016**

(71) Applicant: **Nanjing Chervon Industry Co., Ltd.
Nanjing, Jiangsu 211106 (CN)**

(72) Inventors:
• **JIANG, Liangliang
  Nanjing, Jiangsu 211106 (CN)**
• **FENG, Chengshuang
  Nanjing, Jiangsu 211106 (CN)**

(74) Representative: **Sun, Yiming
HUASUN Patent- und Rechtsanwälte
Friedrichstraße 33
80801 München (DE)**

(54) **ELECTRIC WHEELED DEVICE**

(57)     An electric wheeled device includes a vehicle frame; a power supply device; a traveling assembly including a first traveling wheel, a second traveling wheel, a first traveling motor and a second traveling motor; an operating assembly generating operation amounts for controlling the traveling assembly, where the operation amounts include a first operation amount used for controlling the first traveling wheel and a second operation amount used for controlling the second traveling wheel; and a traveling control device. The traveling control device obtains a first target rotational speed based on the first operation amount and obtains a second target rotational speed based on the first target rotational speed when the first operation amount is different from the second operation amount; and drives the first traveling motor based on the first target rotational speed and drives the second traveling motor based on the second target rotational speed.

FIG. 1

EP 4 744 937 A1

(52) Cooperative Patent Classification (CPC): (Cont.)
   **G05G 1/08;** B60L 2200/40; B60L 2220/46;
   B60L 2240/24; B60L 2240/421; B60L 2240/461;
   B60L 2240/465; B60L 2250/24; B60L 2260/20;
   B60L 2260/26

## Description

### TECHNICAL FIELD

The present application relates to an outdoor traveling device and, in particular, to an electric wheeled device.

### BACKGROUND

Electric wheeled devices are used for working outdoors, for example, a manned mower, a manned snow thrower, and an agricultural machinery vehicle. In the electric wheeled device, two electric motors are usually used to control the left and right wheels, respectively, and a steering wheel or an operating lever is used to control the electric wheeled device to move straight or turn. When the electric wheeled device is turning, since the two electric motors control the left and right wheels, respectively, problems such as slipping and drifting caused by mismatched rotational speeds of the wheels on two sides may occur. These problems result in a sense of weightlessness, leading to a poor user experience.

This part provides background information related to the present application, and the background information is not necessarily the existing art.

### SUMMARY

An object of the present application is to solve or at least alleviate part or all of the preceding problems. Therefore, an object of the present application is to provide an electric wheeled device with better stability during turning.

To achieve the preceding object, the present application adopts the technical solutions below.

In some examples, an electric wheeled device includes: a vehicle frame; a power supply device configured to supply power to the electric wheeled device; a traveling assembly mounted to the vehicle frame and including traveling wheels and traveling motors, where the traveling wheels include a first traveling wheel and a second traveling wheel, and the traveling motors include a first traveling motor for driving the first traveling wheel and a second traveling motor for driving the second traveling wheel; and an operating assembly operable by a user to generate operation amounts for controlling the traveling assembly, where the operation amounts include a first operation amount and a second operation amount, the first operation amount is used for controlling the first traveling wheel, and the second operation amount is used for controlling the second traveling wheel. The electric wheeled device further includes a traveling control device. The traveling control device is configured to: when the first operation amount is different from the second operation amount, obtain a first target rotational speed based on the first operation amount and obtain a second target rotational speed based on the first target rotational speed, where the absolute value of the difference between the first target rotational speed and the second target rotational speed is less than or equal to the absolute value of the difference between the rotational speeds corresponding to the first operation amount and the second operation amount; and drive the first traveling motor based on the first target rotational speed and drive the second traveling motor based on the second target rotational speed.

In some examples, before obtaining the first target rotational speed, the traveling control device is configured to convert the first operation amount into a first preset rotational speed and convert the second operation amount into a second preset rotational speed.

In some examples, that the first target rotational speed is obtained based on the first operation amount includes: obtaining, by the traveling control device, the first target rotational speed based on the first preset rotational speed.

In some examples, the electric wheeled device includes a mode and gear detection device configured to obtain a mode of the electric wheeled device and corresponding speed gear information.

In some examples, that the first target rotational speed is obtained based on the first preset rotational speed includes: acquiring, by the traveling control device, a first limit rotational speed based on the mode and the speed gear information, where the smaller rotational speed between the first preset rotational speed and the first limit rotational speed is the first target rotational speed, and the first limit rotational speed is the upper limit of the rotational speed of the first traveling wheel.

In some examples, the absolute value of the difference between the first target rotational speed and the first limit rotational speed is less than or equal to the absolute value of the difference between the first preset rotational speed and the first limit rotational speed.

In some examples, that the second target rotational speed is obtained based on the first target rotational speed includes: acquiring, by the traveling control device, a second limit rotational speed corresponding to the first target rotational speed based on the mode and the speed gear information, where the larger rotational speed between the second preset rotational speed and the second limit rotational speed is the second target rotational speed, and the second limit rotational speed is the lower limit of the rotational speed of the second traveling wheel.

In some examples, the absolute value of the difference between the second target rotational speed and the second limit rotational speed is less than or equal to the absolute value of the difference between the second preset rotational speed and the second limit rotational speed.

In some examples, the first target rotational speed is less than or equal to the first preset rotational speed, and the second target rotational speed is greater than or equal to the second preset rotational speed.

In some examples, the first operation amount is greater than the second operation amount.

In some examples, the first target rotational speed is greater than the second target rotational speed.

In some examples, the first preset rotational speed is positively correlated with the first operation amount, and the second preset rotational speed is positively correlated with the second operation amount.

In some examples, the operating assembly includes operating levers, and the operation amounts are the angles of rotation of the operating levers.

In some examples, the range of the operation amount is 0 to 720, where when the operation amount is 360, an operating lever is at an initial position; when the operation amount is 0, the operating lever is rotated backward to the maximum angle; and when the operation amount is 720, the operating lever is rotated forward to the maximum angle.

In some examples, the electric wheeled device includes at least one mode and at least one speed gear, where in different modes and speed gears, the first target rotational speed obtained based on the first operation amount varies, and the second target rotational speed obtained based on the first target rotational speed varies.

In some examples, an electric wheeled device includes: a vehicle frame; a power supply device configured to supply power to the electric wheeled device; a traveling assembly mounted to the vehicle frame and including traveling wheels and traveling motors, where the traveling wheels include a first traveling wheel and a second traveling wheel, and the traveling motors include a first traveling motor for driving the first traveling wheel and a second traveling motor for driving the second traveling wheel; and an operating assembly operable by a user to generate operation amounts for controlling the traveling assembly, where the operation amounts include a first operation amount and a second operation amount, the first operation amount is used for controlling the first traveling wheel, the second operation amount is used for controlling the second traveling wheel, the first operation amount includes a corresponding first preset rotational speed, and the second operation amount includes a corresponding second preset rotational speed. The electric wheeled device further includes a traveling control device. The traveling control device is configured to: when the first operation amount is different from the second operation amount, drive the first traveling motor at a first target rotational speed and drive the second traveling motor at a second target rotational speed, where the first target rotational speed is the smaller rotational speed between the first preset rotational speed and a first limit rotational speed, the second target rotational speed is the larger rotational speed between the second preset rotational speed and a second limit rotational speed, and the second limit rotational speed corresponds to the first target rotational speed.

In some examples, an electric wheeled device includes: a vehicle frame; a power supply device configured to supply power to the electric wheeled device; a traveling assembly mounted to the vehicle frame and including traveling wheels and traveling motors, where the traveling wheels include a first traveling wheel and a second traveling wheel, and the traveling motors include a first traveling motor for driving the first traveling wheel and a second traveling motor for driving the second traveling wheel; and an operating assembly operable by a user to generate operation amounts for controlling the traveling assembly, where the operation amounts include a first operation amount and a second operation amount, the first operation amount is used for controlling the first traveling wheel, and the second operation amount is used for controlling the second traveling wheel. The electric wheeled device further includes a traveling control device. The traveling control device is configured to: convert the first operation amount into a first preset rotational speed and convert the second operation amount into a second preset rotational speed; when the first operation amount is different from the second operation amount, reduce the first preset rotational speed to obtain a first target rotational speed, and obtain a second target rotational speed based on the first target rotational speed, where the second target rotational speed is greater than or equal to the second preset rotational speed; and drive the first traveling motor based on the first target rotational speed, and drive the second traveling motor based on the second target rotational speed.

In some examples, that the first preset rotational speed is reduced to obtain the first target rotational speed includes: obtaining the first target rotational speed based on the first preset rotational speed.

In some examples, the electric wheeled device includes at least one mode and at least one speed gear, where that the first target rotational speed is obtained based on the first preset rotational speed includes: acquiring, by the traveling control device, a first limit rotational speed based on the mode and speed gear information, where the smaller rotational speed between the first preset rotational speed and the first limit rotational speed is the first target rotational speed, and the first limit rotational speed is the upper limit of the rotational speed of the first traveling wheel.

In some examples, that the second target rotational speed is obtained based on the first target rotational speed includes: acquiring, by the traveling control device, a second limit rotational speed corresponding to the first target rotational speed based on the mode and the speed gear information, where the larger rotational speed between the second preset rotational speed and the second limit rotational speed is the second target rotational speed, and the second limit rotational speed is the lower limit of the rotational speed of the second traveling wheel.

In some examples, the operating assembly includes operating levers, and the operation amounts are the angles of rotation of the operating levers.

The benefit of the present application is described below. The corresponding first target rotational speed is obtained based on the first operation amount, and then the corresponding second target rotational speed on the other side is obtained based on the first target rotational speed, that is, the second target rotational speed changes with the change of the first target rotational speed so that the target rotational speeds of the wheels on two sides are in a corresponding relationship, thereby reducing the probability of slipping and drifting when turning with different operation amounts. In this manner, the user experience can be improved.

**BRIEF DESCRIPTION OF DRAWINGS**

FIG. 1 is a perspective view of an electric wheeled device according to an example.

FIG. 2 is a perspective view of the electric wheeled device in FIG. 1 from another perspective.

FIG. 3 is a top view illustrating the inside of the electric wheeled device in FIG. 1.

FIG. 4 is a schematic diagram of a control system for traveling motors according to an example.

FIG. 5A is a schematic diagram illustrating that a central traveling control device controls traveling motors according to an example.

FIG. 5B is a schematic diagram illustrating that a first traveling control device and a second traveling control device control traveling motors according to an example.

FIG. 6 is a flowchart illustrating that a traveling control device controls a riding mower to turn according to an example.

FIG. 7 is a schematic diagram illustrating a conversion relationship between an operation amount and a preset rotational speed according to an example.

FIG. 8 is a schematic diagram illustrating a conversion relationship between a first target rotational speed and a second limit rotational speed according to an example.

FIG. 9A shows schematic diagrams illustrating that a riding mower is controlled to turn right according to an example.

FIG. 9B shows schematic diagrams illustrating that a riding mower is controlled to turn right according to another example.

FIG. 10 is a schematic diagram of a control system for traveling motors according to another example.

**DETAILED DESCRIPTION**

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

The electric wheeled device to which the technical solutions of the present application are applicable is specifically a four-wheel electric wheeled device. The electric wheeled device may be a device including a working function, such as a riding mower or a stand-on mower. The user may sit or stand on the electric wheeled device to operate the electric wheeled device to trim lawns and other vegetation. The electric wheeled device may also be a non-working device, such as a utility vehicle (UTV). In the related art, the UTV includes a four-wheel all-terrain vehicle (ATV), a multi-purpose ATV, and a go-kart. In addition, the electric wheeled device disclosed in the present application further includes a manned snow thrower or the like.

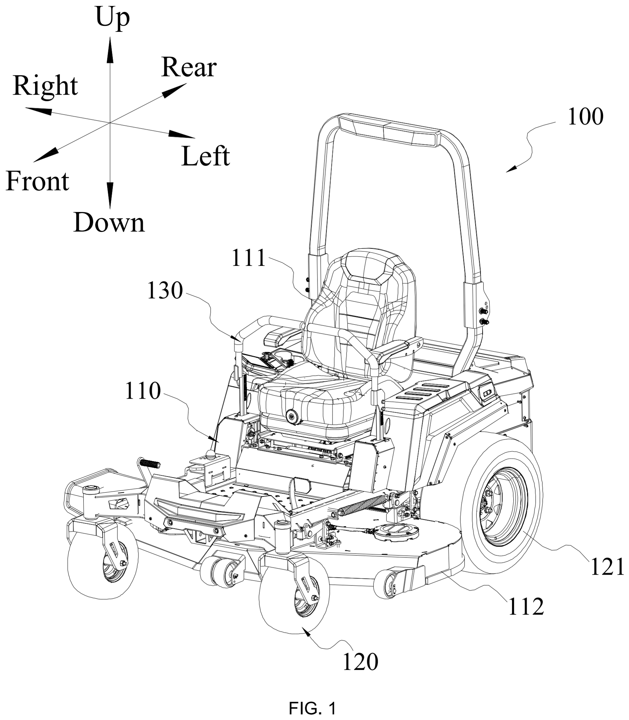

As shown in FIG. 1, the electric wheeled device disclosed in the present application is specifically a riding mower 100, and the user can sit on the riding mower 100 to operate the riding mower 100. In the specification, front, rear, left, right, up, and down are described as directions shown in FIG. 1. Specifically, when the user sits on the riding lawn mower 100 on the ground, it is defined that a direction which the user faces is the front direction, a direction which the user faces away from is the rear direction, a direction on a left-hand side of the user is the left direction, a direction on a right-hand side of the user is the right direction, a direction close to the ground is the down direction, and a direction away from the ground is the up direction.

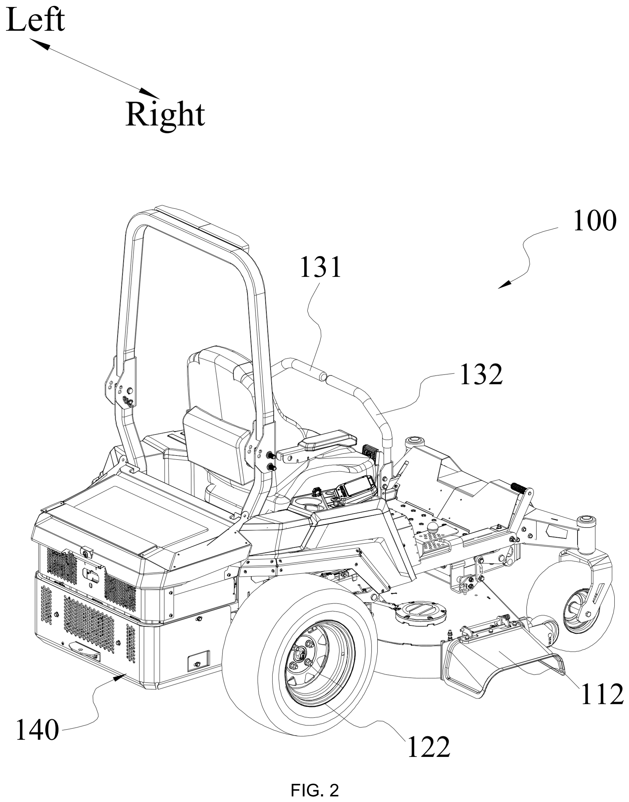

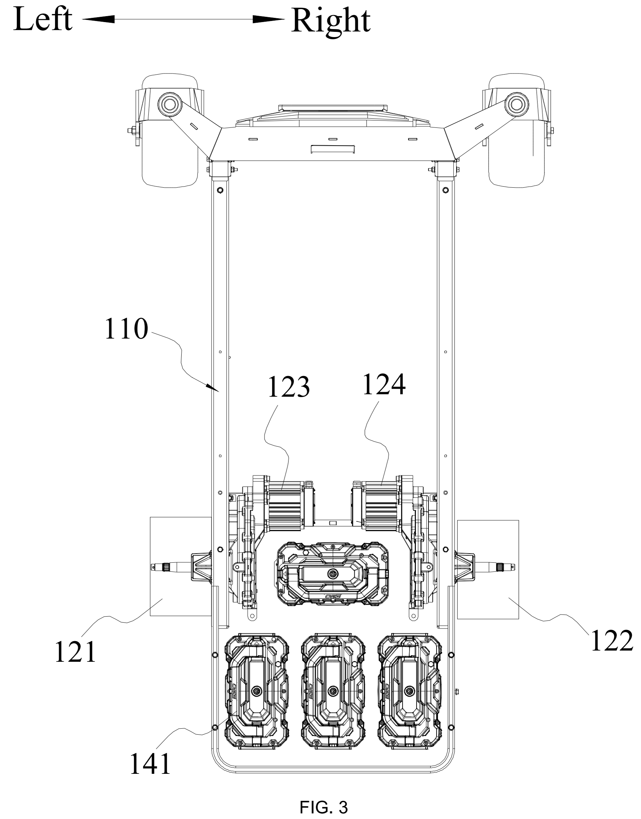

As shown in FIGS. 1 to 3, the riding mower 100 includes a vehicle frame 110, a traveling assembly 120, an operating assembly 130, and a power supply device 140.

The vehicle frame 110 is a main support frame of the riding mower 100, and the vehicle frame 110 at least partially extends in the front and rear direction. A seat 111 is mounted on the vehicle frame 110 and the user can sit on the seat 111. A cutting assembly 112 is disposed below the vehicle frame 110 and used by the riding mower 100 to implement a cutting function. The cutting assembly 112 includes a cutting member, such as a blade, for implementing the cutting function. The cutting assembly 112 further includes a cutting motor for driving the cutting member to rotate. The cutting assembly 112 may include more than one cutting member and more than one cutting motor. The cutting motor is controlled by a cutting control device. In some examples, the cutting control device includes a control chip, such as a microcontroller unit (MCU) or an Advanced reduced instruction set computer (RISC) Machine (ARM) chip.

The traveling assembly 120 is mounted to the vehicle frame 110 and is configured to enable the riding mower 100 to travel on the ground. The traveling assembly 120 includes traveling wheels and traveling motors. The traveling wheels include a first traveling wheel 121 and a second traveling wheel 122. The first traveling wheel 121 refers to an outer wheel of the riding mower 100 during turning, and the second traveling wheel 122 refers to an inner wheel of the riding mower 100 during turning. For example, when the riding mower 100 turns right, the left wheel is the first traveling wheel 121, and the right wheel is the second traveling wheel 122. When the riding mower 100 turns left, the right wheel is the first traveling wheel 121, and the left wheel is the second traveling wheel 122. The traveling motors include a first traveling motor 123 driving the first traveling wheel 121 and a second traveling motor 124 driving the second traveling wheel 122. The two motors generate a speed difference to enable the riding mower 100 to turn.

In the following text of the present application, the case where the riding mower 100 turns right is used as an example for a specific description. In this case, the left wheel is the first traveling wheel 121, the left motor is the first traveling motor 123, the right wheel is the second traveling wheel 122, and the right motor is the second traveling motor 124. Since the traveling motors are drivingly connected to the rear traveling wheels of the riding mower 100, the first traveling wheel 121 and the second traveling wheel 122 are the rear traveling wheels.

The operating assembly 130 can be operated by the user, and the user sends a control instruction through the operating assembly 130 to control the operation of the riding mower 100. The operating assembly 130 can be operated by the user to set the cutting speed, the traveling speed, and the traveling direction of the riding mower 100. In other words, the operating assembly 130 can be operated by the user to set the operation state of the riding mower 100, and the operation state includes a cutting state and a traveling state.

The operating assembly 130 can be operated by the user to generate an operation amount $\omega$ for controlling the traveling assembly 120. The operating assembly 130 includes a pair of operating levers, which are a first operating lever 131 and a second operating lever 132. The operation amount $\omega$ is specifically the angle of rotation of the operating lever. The first operating lever 131 can generate a first operation amount $\omega1$ to control the first traveling wheel 121, and the second operating lever 132 can generate a second operation amount $\omega2$ to control the second traveling wheel 122. In the following text of the present application, the case where the riding mower 100 turns right is used as an example for a specific description. In this case, the left operating lever is the first operating lever 131, and the right operating lever is the second operating lever 132.

The power supply device 140 is configured to supply electric power to the riding mower 100. The power supply device 140 is configured to supply electric power to at least the cutting motor and the traveling motors. The power supply device 140 may also supply electric power to other electronic components (such as the cutting control device) in the riding mower 100. In some examples, the power supply device 140 is disposed on the rear side of the seat 111 on the vehicle frame 110. In some examples, the power supply device 140 includes multiple battery packs 141 capable of supplying electric power to the riding mower 100.

The riding mower 100 further includes a traveling control device 150, and the traveling control device 150 includes a control chip such as an MCU or an ARM. The traveling control device 150 can acquire the first operation amount $\omega1$ of the first operating lever 131 and the second operation amount $\omega2$ of the second operating lever 132, perform certain processing, and then drive and control the first traveling motor 123 and the second traveling motor 124. In some examples, two traveling control devices 150 are provided and control the first traveling motor 123 and the second traveling motor 124, respectively. In some examples, the traveling control device 150 is a central traveling control device 150 and can control the first traveling motor 123 and the second traveling motor 124.

The operating assembly 130 further includes an operating position sensor 133 connected to the traveling control device 150 and used for sensing and acquiring the first operation amount $\omega1$ of the first operating lever 131 and the second operation amount $\omega2$ of the second operating lever 132 and transmitting the same to the traveling control device 150. The operating position sensor 133 includes a first operating position sensor 1331 and a second operating position sensor 1332. The first operating position sensor 1331 is connected to the first operating lever 131 and used for sensing and acquiring the first operation amount $\omega1$. The second operating position sensor 1332 is connected to the second operating lever 132 and used for sensing and acquiring the second operation amount $\omega2$.

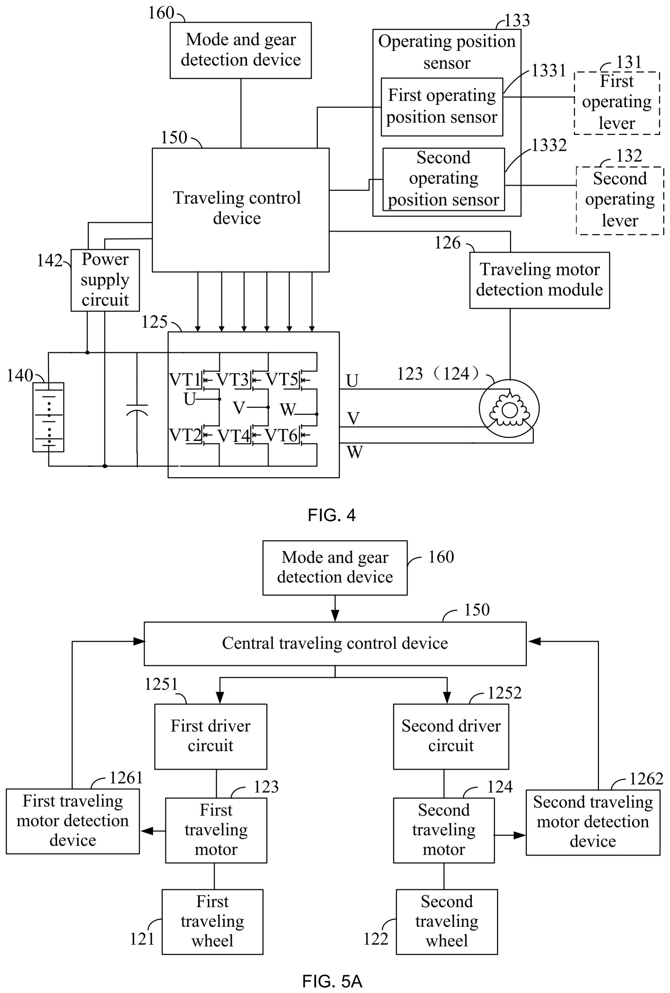

FIG. 4 is a control system for the traveling motors. As shown in FIG. 4, in some examples, in addition to the first operating lever 131, the second operating lever 132, the operating position sensor 133, and the traveling control device 150, the control system for the traveling motors further includes a driver circuit 125, a power supply circuit 142, and a traveling motor detection device 126. Since the control systems for the first traveling motor 123 and the second traveling motor 124 have the same or similar functions and components, the control system described in this example can be applied to the control systems for the first traveling motor 123 and the second traveling motor 124. In other words, the traveling control device 150 described in this example may be a first traveling control device 151 configured to control the first traveling motor 123 or a second traveling control device 152 configured to control the second traveling motor 124.

In some examples, the traveling control device 150 may be a dedicated controller, such as a dedicated control chip (for example, an MCU). The power supply circuit 142 is connected to the power supply device 140 and is configured to receive power from the power supply device 140 and convert the power of the power supply device 140 into power used by at least the traveling control device 150. The power supply device 140 includes the multiple battery packs 141. The driver circuit 125 is electrically connected to the traveling control device 150 and the first traveling motor 123 (or the second traveling motor 124) and controls the operation of the first traveling motor 123 (or the second traveling motor 124) according to a drive signal outputted by the traveling control device 150. In an example, the first traveling motor 123 (or the second traveling motor 124) is a three-phase brushless motor having three phases of windings, and the driver circuit 125 is a three-phase bridge inverter including semiconductor switches VT1, VT2, VT3, VT4, VT5, and VT6. The semiconductor switches VT1 to VT6 may be field-effect transistors, insulated-gate bipolar transistors (IGBTs), or the like. A gate terminal of each switch is electrically connected to the traveling control device 150, and a drain or a source of each switch is electrically connected to a winding of the first traveling motor 123 (or the second traveling motor 124).

The traveling motor detection device 126 is connected to the first traveling motor 123 (or the second traveling motor 124) and is configured to detect the operating parameters of the first traveling motor 123 (or the second traveling motor 124), such as the rotor position, actual rotational speed, and/or phase current of the first traveling motor 123 (or the second traveling motor 124). In an example, the traveling motor detection device 126 includes a speed detection sensor disposed near or inside the first traveling motor 123 (or the second traveling motor 124) to obtain the actual rotational speed of the first traveling motor 123 (or the second traveling motor 124). For example, the traveling motor detection device 126 includes a Hall sensor disposed near the rotor of the first traveling motor 123 (or the second traveling motor 124) to obtain the rotor position and actual rotational speed of the first traveling motor 123 (or the second traveling motor 124). In an example, if the first traveling motor 123 (or the second traveling motor 124) is a brushless motor, the electrical signal outputted by the first traveling motor 123 (or the second traveling motor 124) is a periodically varying back electromotive force. Therefore, by detecting the voltage of the first traveling motor 123 (or the second traveling motor 124) and finding the zero-crossing of the back electromotive force, the actual rotational speed of the first traveling motor 123 (or the second traveling motor 124) can be obtained. In an example, the position of the rotor may be estimated according to the phase current of the first traveling motor 123 (or the second traveling motor 124), and a current detector may be disposed between the first traveling motor 123 (or the second traveling motor 124) and the traveling control device 150.

The riding mower 100 includes at least one mode and at least one speed gear. In some examples, the riding mower 100 includes three modes, which are a control mode, a normal mode, and a sport mode. The control mode is a relatively gentle mode for the overall traveling and mowing operation of the riding mower 100, the normal mode is a conventional mode of the riding mower 100, and the sport mode is a relatively vigorous mode for the overall traveling and mowing operation of the riding mower 100, that is, a high-performance mode. In addition, the riding mower 100 may include other types or other numbers of modes, which are not limited in the present application. In some examples, the riding mower 100 includes three speed gears. In some examples, the riding mower 100 includes four speed gears. In some examples, the riding mower 100 includes five speed gears. In addition, the riding mower 100 may include other numbers of speed gears, which are not limited in the present application.

As shown in FIG. 4, the riding mower 100 further includes a mode and gear detection device 160 connected to the traveling control device 150 and used for detecting the mode and speed gear of the riding mower 100 in real time and transmitting the mode and speed gear to the traveling control device 150 so that the traveling control device 150 can perform a control operation based on the different modes and speed gears.

In some examples, the driver circuit 125 includes a first driver circuit 1251 and a second driver circuit 1252. The first driver circuit 1251 is used for driving the first traveling motor 123, and the second driver circuit 1252 is used for driving the second traveling motor 124. The traveling motor detection device 126 includes a first traveling motor detection device 1261 and a second traveling motor detection device 1262. The first traveling motor detection device 1261 is used for detecting and obtaining a first actual rotational speed of the first traveling motor 123, and the second traveling motor detection device 1262 is used for detecting and obtaining a second actual rotational speed of the second traveling motor 124.

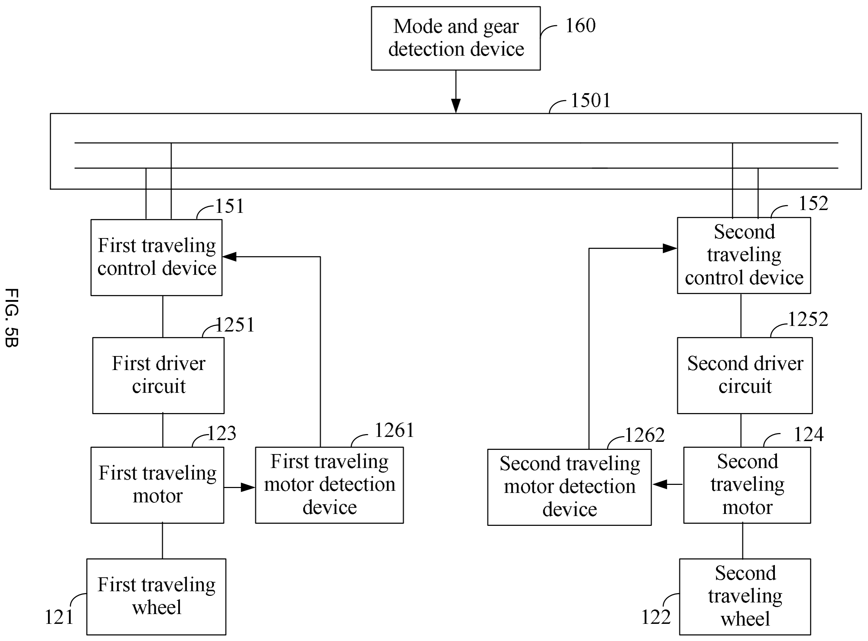

The traveling control device 150 is configured to control the first traveling motor 123 and the second traveling motor 124. In some examples, referring to FIG. 5A, the traveling control system includes a central traveling control device 150 for controlling the first traveling motor 123 and the second traveling motor 124. In some examples, referring to FIG. 5B, the traveling control system includes the first traveling control device 151 for controlling the first traveling motor 123 and the second traveling control device 152 for controlling the second traveling motor 124, and data transmission is achieved through a bus 1501.

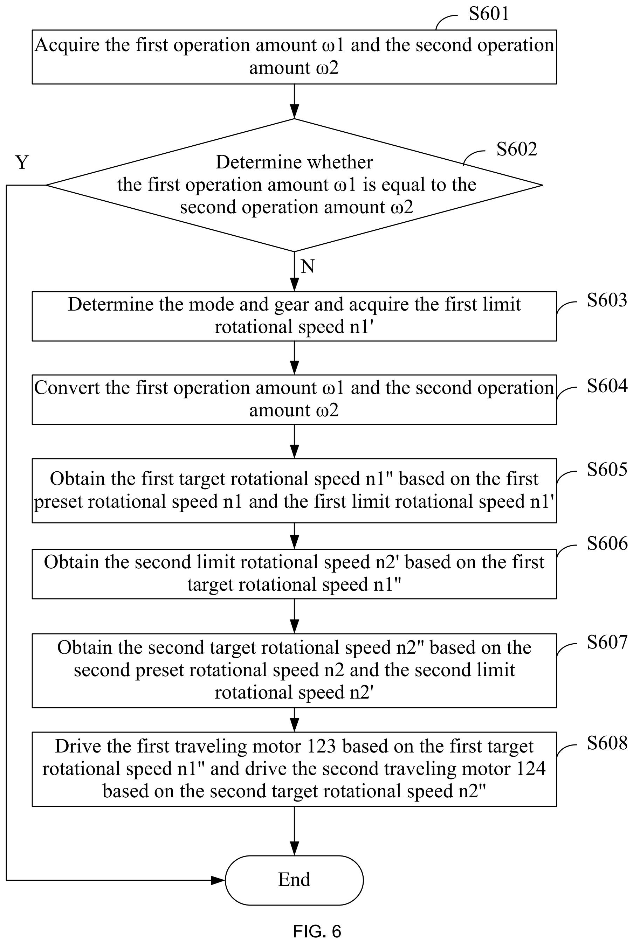

In some examples, the case where the traveling control device 150 is the central traveling control device 150 is used as an example in the present application, and the case where the central traveling control device 150 controls the first traveling motor 123 and the second traveling motor 124 when the riding mower 100 turns after processing the first operation amount $\omega 1$ and the second operation amount $\omega 2$ is specifically described below. The specific steps are shown in FIG. 6 and described below.

In step S601, the first operation amount $\omega 1$ and the second operation amount $\omega 2$ are acquired.

The central traveling control device 150 acquires the first operation amount $\omega 1$ of the first operating lever 131 based on the first operating position sensor 1331 and acquires the second operation amount $\omega 2$ of the second operating lever 132 based on the second operating position sensor 1332.

In the present application, the operation amount $\omega$ is limited to a range of 0 to 720. When the operation amount $\omega$ is 360, it indicates that the operating lever is not rotated forward or backward, the operating lever is at the initial position, and the angle of rotation is 0. When the operation amount $\omega$ is 0, it indicates that the operating lever is rotated backward to the maximum angle, corresponding to the backward movement of the traveling wheel. When the operation amount $\omega$ is 720, it indicates that the operating lever is rotated forward to the maximum angle, corresponding to the forward movement of the traveling wheel. A value between 0 and 360 indicates that the operating lever is operated to control the travel wheel to move backward, and a value between 360 and 720 indicates that the operating lever is operated to control the travel wheel to move forward.

In step S602, whether the first operation amount $\omega 1$ is equal to the second operation amount $\omega 2$ is determined.

After acquiring the first operation amount $\omega 1$ and the second operation amount $\omega 2$, the central traveling control device 150 needs to determine the magnitude relationship between the first operation amount $\omega 1$ and the second operation amount $\omega 2$. If the first operation amount $\omega 1$ and the second operation amount $\omega 2$ are equal in magnitude, it indicates that the riding mower 100 travels forward without turning, travels backward without turning, or remains stationary. In this case, the control ends.

Since the present application defines that the first operation amount $\omega 1$ corresponds to the outer traveling wheel during turning, the first operation amount $\omega 1$ is always greater than the second operation amount $\omega 2$. The case where the first operation amount $\omega 1$ corresponds to the left operating lever (the first operating lever 131), that is, the riding mower 100 turns right, is used as an example for a specific description in the present application. After it is determined that the riding mower 100 is in the turning state, step S603 is performed.

In step S603, the mode and gear are determined and the first limit rotational speed $n1'$ is acquired.

After determining that the riding mower 100 is in the turning state, the central traveling control device 150 acquires the current mode of the riding mower 100 and the corresponding speed gear information from the mode and gear detection device 160 so that the central traveling control device 150 determines the first limit rotational speed $n1'$ of the first traveling wheel 121 based on the mode and speed gear information. The first limit rotational speed $n1'$ corresponds to the upper limit of the rotational speed of the first traveling wheel 121. The first limit rotational speed $n1'$ corresponding to different modes and corresponding speed gear information is set based on empirical values.

In step S604, the first operation amount $\omega 1$ and the second operation amount $\omega 2$ are converted.

After determining the mode and gear of the riding mower 100, the central traveling control device 150 converts the first operation amount $\omega 1$ and the second operation amount $\omega 2$. The central traveling control device 150 converts the first operation amount $\omega 1$ into a first preset rotational speed $n1$ and converts the second operation amount $\omega 2$ into a second preset rotational speed $n2$. The first preset rotational speed $n1$ is a given rotational speed for controlling the first traveling wheel 121 corresponding to the first operation amount $\omega 1$, and the second preset rotational speed $n2$ is a given rotational speed for controlling the second traveling wheel 122 corresponding to the second operation amount $\omega 2$.

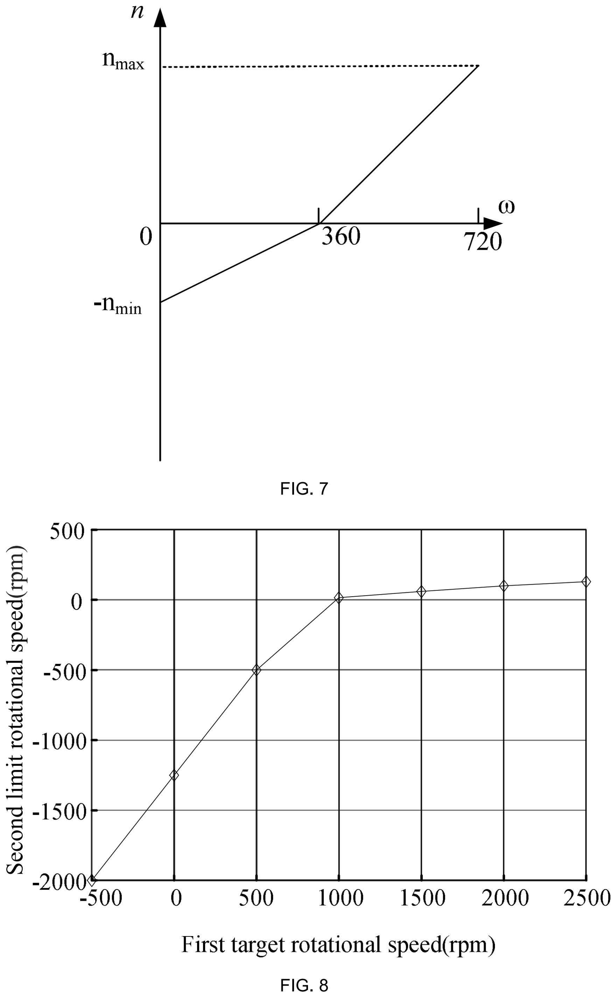

The conversion relationship between the operation amount $\omega$ and the preset rotational speed $n$ is specifically shown in FIG. 7. Based on FIG. 7, it can be seen that the preset rotational speed $n$ and the operation amount $\omega$ are generally in a positive correlation, specifically a piecewise positive correlation. The degree of positive correlation between the operation amount $\omega$ and the preset rotational speed when the operation amount $\omega$ is less than or equal to 360 is less than the degree of positive correlation between the operation amount $\omega$ and the preset rotational speed when the operation amount $\omega$ is greater than 360. The first preset rotational speed $n1$ is positively correlated with the first operation amount $\omega 1$, and the second preset rotational speed $n2$ is positively correlated with the second operation amount $\omega 2$.

The formula for the conversion relationship between the operation amount $\omega$ and the preset rotational speed $n$ is specifically described below.

$$\mathrm{n} = \begin{cases} \frac{n_{max}}{360}(\omega - 360), 360 < \omega \le 720 \\ \frac{n_{min}}{360}(\omega - 360), 0 \le \omega \le 360 \end{cases}$$

$n_{max}$ denotes the maximum preset rotational speed when the operation amount $\omega$ is 720, and $n_{min}$ denotes the minimum preset rotational speed when the operation amount $\omega$ is 0. Since the riding mower 100 includes multiple modes and multiple speed gears, both $n_{max}$ and $n_{min}$ vary with different modes and different speed gears. That is, the specific conversion relationship between the operation amount $\omega$ and the preset rotational speed $n$ needs to be determined according to the mode and speed gear of the riding mower 100. Therefore, after the mode and speed gear of the riding mower 100 are determined in step S603, conversion is performed based on the formula for the conversion relationship between the operation amount $\omega$ and the corresponding preset rotational speed $n$.

In step S605, the first target rotational speed $n1''$ is obtained based on the first preset rotational speed $n1$ and the first limit rotational speed $n1'$.

After the first preset rotational speed $n1$ and the second preset rotational speed $n2$ are obtained in step S604, if the traveling motors are driven and controlled directly according to the two preset rotational speeds, the corresponding traveling wheels may slip or drift. Therefore, the preset rotational speeds need to be processed before the traveling motors are driven.

The central traveling control device 150 obtains the first target rotational speed $n1''$ based on the first preset rotational speed $n1$ and the first limit rotational speed $n1'$. Since the first limit rotational speed $n1'$ is the upper limit of the speed of the first traveling wheel 121, when the first preset rotational speed $n1$ is less than the first limit rotational speed $n1'$, the first preset rotational speed n1 is the first target rotational speed n1"; when the first preset rotational speed n1 is greater than or equal to the first limit rotational speed n1', the first limit rotational speed n1' is the first target rotational speed n1", that is, in this case, the first target rotational speed n1" is less than or equal to the first preset rotational speed n1.

In step S606, the second limit rotational speed n2' is obtained based on the first target rotational speed n1".

After the smaller rotational speed between the first preset rotational speed n1 and the first limit rotational speed n1' is selected as the first target rotational speed n1" in step S605, the central traveling control device 150 obtains the second limit rotational speed n2' according to the first target rotational speed n1". The second limit rotational speed n2' corresponds to the lower limit of the rotational speed of the second traveling wheel 122.

The conversion relationship between the first target rotational speed n1" and the second limit rotational speed n2' is shown in FIG. 8. It can be seen from FIG. 8 that the second limit rotational speed n2' and the first target rotational speed n1" are generally in a positive correlation; when the first target rotational speed n1" is less than or equal to 1000 rpm, the corresponding rotational speed change of the second limit rotational speed n2' is larger; and when the first target rotational speed n1" is greater than 1000 rpm, the corresponding rotational speed change of the second limit rotational speed n2' is smaller. FIG. 8 is an example diagram illustrating the relationship between the first target rotational speed n1" and the second limit rotational speed n2', corresponding to a speed gear in a mode of the riding mower 100. The corresponding values and specific correlations between the first target rotational speed n1" and the second limit rotational speed n2' change in different modes and different speed gears, but the second limit rotational speed n2' and the first target rotational speed n1" are always in a positive correlation, and the second limit rotational speed n2' always follows a trend of initially changing more significantly and subsequently changing more moderately.

In step S607, the second target rotational speed n2" is obtained based on the second preset rotational speed n2 and the second limit rotational speed n2'.

The central traveling control device 150 obtains the second target rotational speed n2" based on the second preset rotational speed n2 and the second limit rotational speed n2'. Since the second limit rotational speed n2' is the lower limit of the speed of the second traveling wheel 122, when the second preset rotational speed n2 is greater than the second limit rotational speed n2', the second preset rotational speed n2 is the second target rotational speed n2"; when the second preset rotational speed n2 is less than or equal to the second limit rotational speed n2', the second limit rotational speed n2' is the second target rotational speed n2", that is, in this case, the second target rotational speed n2" is greater than or equal to the second preset rotational speed n2.

In step S608, the first traveling motor 123 is driven based on the first target rotational speed n1" and the second traveling motor 124 is driven based on the second target rotational speed n2".

After obtaining the second target rotational speed n2" in step S607, the central traveling control device 150 drives the first traveling motor 123 based on the first target rotational speed n1" and drives the second traveling motor 124 based on the second target rotational speed n2" so that the first traveling motor 123 drives the first traveling wheel 121 connected to the first traveling motor 123 to rotate, and the second traveling motor 124 drives the second traveling wheel 122 connected to the second traveling motor 124 to rotate.

Through the preceding process, the first target rotational speed n1" and the second target rotational speed n2" are obtained. The first target rotational speed n1" is less than or equal to the first preset rotational speed n1, and the second target rotational speed n2" is greater than or equal to the second preset rotational speed n2. In this case, the absolute value of the difference between the first target rotational speed n1" and the second target rotational speed n2" is less than or equal to the absolute value of the difference between the first preset rotational speed n1 and the second preset rotational speed n2, the absolute value of the difference between the first target rotational speed n1" and the first limit rotational speed n1' is less than or equal to the absolute value of the difference between the first preset rotational speed n1 and the first limit rotational speed n1', and the absolute value of the difference between the second target rotational speed n2" and the second limit rotational speed n2' is less than or equal to the absolute value of the difference between the second preset rotational speed n2 and the second limit rotational speed n2'.

Therefore, during the turning process of the riding mower 100, by reducing the rotational speed corresponding to the first operation amount $\omega 1$ of the first operating lever 131, the outer traveling wheel (the first traveling wheel 121) can actually be driven at a rotational speed less than the rotational speed (the first preset rotational speed n1) corresponding to the first operation amount $\omega 1$; and by increasing the rotational speed corresponding to the second operation amount $\omega 2$ of the second operating lever 132, the inner traveling wheel (the second traveling wheel 122) can actually be driven at a rotational speed greater than the rotational speed (the second preset rotational speed n2) corresponding to the second operation amount $\omega 2$. In this manner, the rotational speed difference between the outer traveling wheel and the inner traveling wheel during turning can be reduced, thereby reducing the probability of the riding mower 100 slipping or drifting during turning.

In addition, the central traveling control device 150 can obtain the first actual rotational speed of the first traveling motor 123 detected by the first traveling motor detection device 1261 and the second actual rotational speed of the second traveling motor 124 detected by the second traveling motor detection device 1262. The first actual rotational speed and the second actual rotational speed specifically correspond to the straight traveling speed or stationary speed of the riding mower 100 before turning. Optionally, the first actual rotational speed and the second actual rotational speed may be positive rotational speeds, indicating that the riding mower 100 is turning right while moving forward. Optionally, the first actual rotational speed and the second actual rotational speed may be negative rotational speeds, indicating that the riding mower 100 is turning right while moving backward. Optionally, the first actual rotational speed and the second actual rotational speed may be zero, indicating that the riding mower 100 starts from a standstill and directly turns right. In some examples, the first target rotational speed n1" is the same as the first actual rotational speed, or the second target rotational speed n2" is the same as the second actual rotational speed.

In some examples, when the first traveling motor 123 is driven based on the first target rotational speed n1" and the second traveling motor 124 is driven based on the second target rotational speed n2", semi-open loop control is performed to determine the torque output of the traveling motors. That is, a proportional-integral (PI) controller is used to control the speed of the traveling motor. As the name suggests, the PI controller includes a proportional term and an integral term. In an example, the proportional term is defined as the proportional coefficient P multiplied by the error between the preset rotational speed n and the limit rotational speed n'. When the difference between the preset rotational speed n and the limit rotational speed n' decreases, the torque of the traveling motor can be limited, thereby making it less likely for the riding mower 100 to slip or drift during turning. Therefore, when the traveling motors are driven at the first target rotational speed n1" and the second target rotational speed n2", the difference between the target rotational speed n" and the limit rotational speed n' is less than or equal to the difference between the preset rotational speed n and the limit rotational speed n', that is, the difference between the preset rotational speed n and the limit rotational speed n' is reduced, and the reduced difference is the difference between the target rotational speed n" and the limit rotational speed n'.

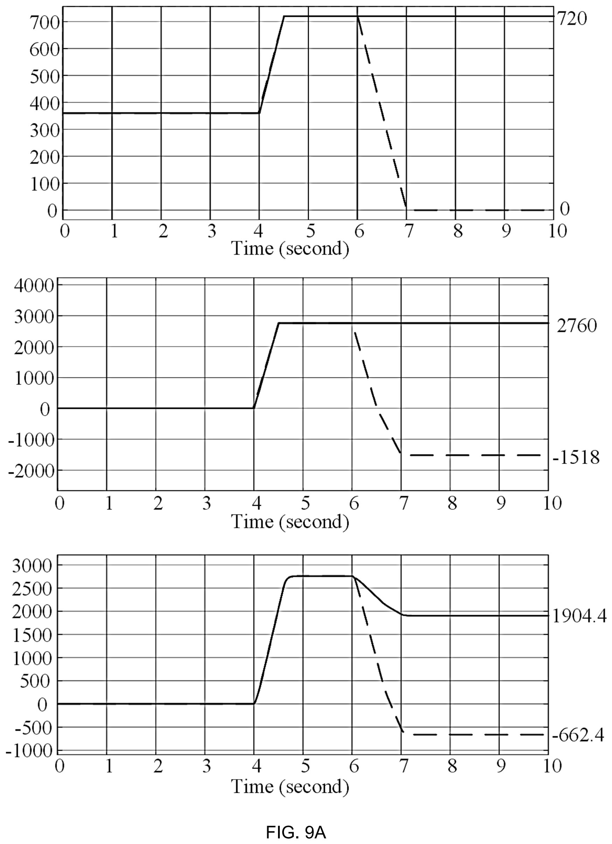

FIG. 9A shows schematic diagrams illustrating that the riding mower 100 is controlled to turn right according to an example. The solid line represents relevant data corresponding to the first operating lever 131, and the dashed line represents relevant data corresponding to the second operating lever 132. The top schematic diagram in FIG. 9A illustrates the first operation amount ω1 of the first operating lever 131 and the second operation amount ω2 of the second operating lever 132. As can be seen from the figure, the original operation amounts of the first operating lever 131 and the second operating lever 132 of the riding mower 100 are both 720, that is, the riding mower 100 is originally in a straight forward traveling state. Subsequently, the first operation amount ω1 remains unchanged at 720, and the second operation amount ω2 decreases to 0, which corresponds to controlling the riding mower 100 to turn right. The middle schematic diagram in FIG. 9A illustrates the first preset rotational speed n1 after conversion of the first operation amount ω1 and the second preset rotational speed n2 after conversion of the second operation amount ω2. The first preset rotational speed n1 is 2760, and the second preset rotational speed n2 is - 1518. The bottom schematic diagram in FIG. 9A illustrates the first target rotational speed n1" corresponding to the first preset rotational speed n1 and the second target rotational speed n2" obtained based on the first target rotational speed n1". The first target rotational speed n1" is 1904.4, which is less than the first preset rotational speed n1; and the second target rotational speed n2" is -662.4, which is greater than the second preset rotational speed n2. In this case, the first traveling motor 123 is controlled at the first target rotational speed n1", and the second traveling motor 124 is controlled at the second target rotational speed n2".

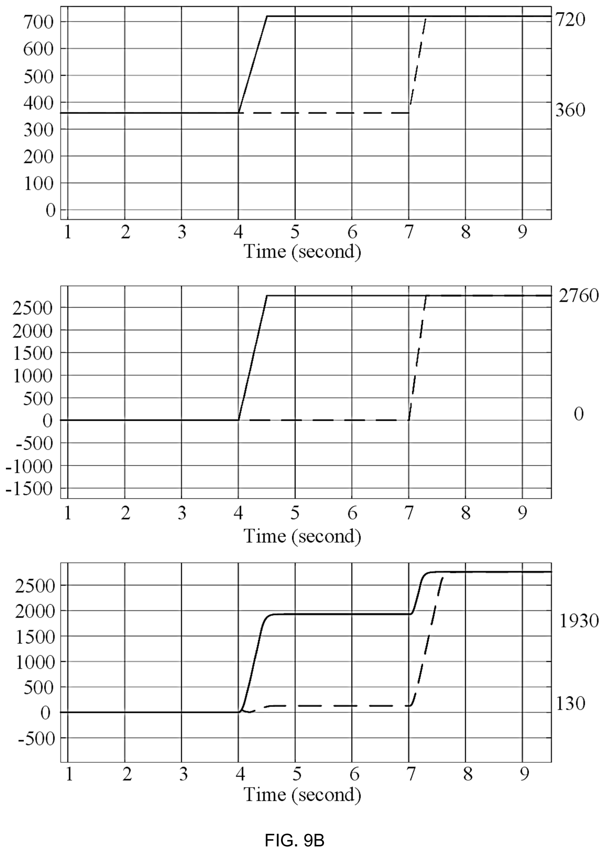

FIG. 9B shows schematic diagrams illustrating that the riding mower 100 is controlled to turn right according to another example. The solid line represents relevant data corresponding to the first operating lever 131, and the dashed line represents relevant data corresponding to the second operating lever 132. The top schematic diagram in FIG. 9B illustrates the first operation amount ω1 of the first operating lever 131 and the second operation amount ω2 of the second operating lever 132. As can be seen from the figure, the original operation amounts of the first operating lever 131 and the second operating lever 132 of the riding mower 100 are both 360, that is, the riding mower 100 is originally in a stationary state. Subsequently, the first operation amount ω1 increases to 720, and the second operation amount ω2 is still 360, which corresponds to controlling the riding mower 100 to turn right. The middle schematic diagram in FIG. 9B illustrates the first preset rotational speed n1 after conversion of the first operation amount ω1 and the second preset rotational speed n2 after conversion of the second operation amount ω2. The first preset rotational speed n1 is 2760, and the second preset rotational speed n2 is 0. The bottom schematic diagram in FIG. 9B illustrates the first target rotational speed n1" corresponding to the first preset rotational speed n1 and the second target rotational speed n2" obtained based on the first target rotational speed n1". The first target rotational speed n1" is 1930, which is less than the first preset rotational speed n1; and the second target rotational speed n2" is 130, which is greater than the second preset rotational speed n2. In this case, the first traveling motor 123 is controlled at the first target rotational speed n1", and the second traveling motor 124 is controlled at the second target rotational speed n2".

In FIG. 9B, the riding mower 100 turns right from a standstill. Specifically, the inner second traveling motor 124 drives the second traveling wheel 122 to move forward at a relatively low speed, and the outer first traveling motor 123 drives the first traveling wheel 121 to move forward at a relatively high speed. In some examples, when the riding mower 100 turns right from a standstill, the inner second traveling motor 124 drives the second traveling wheel 122 to move backward, while the outer first traveling motor 123 stops or drives the first traveling wheel 121 to move forward. In some examples, when the riding mower 100 turns right from a standstill, the inner second traveling motor 124 drives the second traveling wheel 122 to move backward at a relatively high speed, while the outer first traveling motor 123 drives the first traveling wheel 121 to move backward at a relatively low speed.

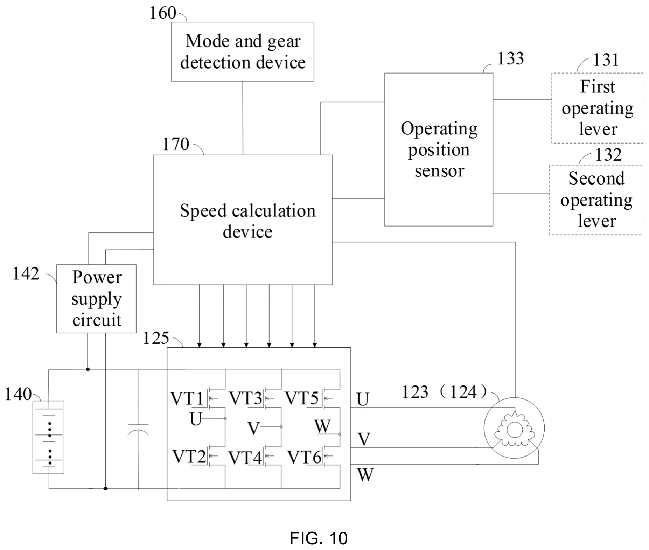

In some examples, FIG. 10 is another control system for the traveling motors. As shown in FIG. 10, the riding mower 100 includes a speed calculation device 170 connected to the mode and gear detection device 160 and capable of acquiring the mode and speed gear of the riding mower 100. The speed calculation device 170 is also connected to the operating position sensor 133, and the first operation amount $\omega 1$ of the first operating lever 131 and the second operation amount $\omega 2$ of the second operating lever 132 obtained through sensing are transmitted to the speed calculation device 170. In addition, the control system in FIG. 10 further includes the driver circuit 125 and the power supply circuit 142, both of which are connected to the speed calculation device 170. The specific functions are the same as those of the control system corresponding to FIG. 4 in the present application, and the details are not repeated here.

After acquiring the mode, speed gear, and operation amounts of the two operating levers of the riding mower 100, the speed calculation device 170 can directly output corresponding rotational speeds to drive the first traveling motor 123 and the second traveling motor 124. For different modes and different speed gears, the rotational speeds of the two motors corresponding to the operation amounts of the two operating levers are preset based on empirical values so that after determining the mode and speed gear, the speed calculation device 170 can control the first traveling motor 123 and the second traveling motor 124 directly based on the operation amounts of the two operating levers.

In some examples, in a straight traveling condition in a certain mode and a certain speed gear, when the operation amount of the operating lever is in a range of 0 to 720, the speed calculation device 170 outputs a rotational speed in a range of - 1500 to 2700 rpm for controlling the traveling motor. Moreover, for this mode and this speed gear, in a turning condition, when the operation amount of the operating lever is in a range of 0 to 720, the speed calculation device 170 outputs a rotational speed in a range of -100 to 2000 rpm for controlling the traveling motor. That is, for the same mode and the same speed gear, the rotational speeds of the traveling motor are different in the straight traveling condition and the turning condition.

Therefore, the speed calculation device 170 can directly control the traveling motors according to the mode, speed gear, and angles of rotation of the operating levers, leading to a higher efficiency. Moreover, the different rotational speeds of the traveling motors in the straight traveling condition and the turning condition are preset based on empirical values so that the riding mower 100 has a lower probability of slipping and drifting during turning.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. An electric wheeled device, comprising:

   a vehicle frame (110);
   a power supply device (140) supplying power to the electric wheeled device;
   a traveling assembly (120) mounted to the vehicle frame and comprising traveling wheels and traveling motors, wherein the traveling wheels comprise a first traveling wheel (121) and a second traveling wheel (122), and the traveling motors comprise a first traveling motor (123) for driving the first traveling wheel and a second traveling motor (124) for driving the second traveling wheel;
   an operating assembly (130) operable by a user to generate operation amounts for controlling the traveling assembly, wherein the operation amounts comprise a first operation amount and a second operation amount, the first operation amount is used for controlling the first traveling wheel, and the second operation amount is used for controlling the second traveling wheel; and
   a traveling control device (150) that obtains a first target rotational speed based on the first operation amount and obtains a second target rotational speed based on the first target rotational speed when the first operation amount is different from the second operation amount, and drives the first traveling motor based on the first target rotational speed and drives the second traveling motor based on the second target rotational speed, wherein an absolute value of a difference between the first target rotational speed and the second target rotational speed is less than or equal to an absolute value of a difference between rotational speeds corresponding to the first operation amount and the second operation amount.

2. The electric wheeled device of claim 1, wherein before obtaining the first target rotational speed, the traveling control device converts the first operation amount into a first preset rotational speed and converts the second operation amount into a second preset rotational speed.

3. The electric wheeled device of claim 2, wherein the traveling control device obtains the first target rotational speed based on the first preset rotational speed.

4. The electric wheeled device of claim 3, comprising a mode and gear detection device (160) that obtains a mode of the electric wheeled device and corresponding speed gear information.

5. The electric wheeled device of claim 4, wherein the traveling control device acquires a first limit rotational speed based on the mode of the electric wheeled device and the speed gear information, a smaller one between the first preset rotational speed and the first limit rotational speed is the first target rotational speed, and the first limit rotational speed is an upper limit of a rotational speed of the first traveling wheel.

6. The electric wheeled device of claim 5, wherein an absolute value of a difference between the first target rotational speed and the first limit rotational speed is less than or equal to an absolute value of a difference between the first preset rotational speed and the first limit rotational speed.

7. The electric wheeled device of claim 5, wherein the traveling control device acquires a second limit rotational speed corresponding to the first target rotational speed based on the mode of the electric wheeled device and the speed gear information, a larger one between the second preset rotational speed and the second limit rotational speed is the second target rotational speed, and the second limit rotational speed is a lower limit of a rotational speed of the second traveling wheel.

8. The electric wheeled device of claim 7, wherein an absolute value of a difference between the second target rotational speed and the second limit rotational speed is less than or equal to an absolute value of a difference between the second preset rotational speed and the second limit rotational speed.

9. The electric wheeled device of claim 2, wherein the first target rotational speed is less than or equal to the first preset rotational speed, and the second target rotational speed is greater than or equal to the second preset rotational speed.

10. The electric wheeled device of claim 1, wherein the first operation amount is greater than the second operation amount.

11. The electric wheeled device of claim 1, wherein the first target rotational speed is greater than the second target rotational speed.

12. The electric wheeled device of claim 2, wherein the first preset rotational speed is positively correlated with the first operation amount, and the second preset rotational speed is positively correlated with the second operation amount.

13. The electric wheeled device of claim 1, wherein the operating assembly comprises operating levers, and the operation amounts are angles of rotation of the operating levers.

14. The electric wheeled device of claim 11, wherein a range of each of the operation amounts is 0 to 720, the operating assembly comprises an operating lever, the operating lever is at an initial position when the operation amount is 360, the operating lever is rotated backward to a maximum angle when the operation amount is 0, and the operating lever is rotated forward to a maximum angle when the operation amount is 720.

15. The electric wheeled device of claim 1, wherein the electric wheeled device has at least one mode and at least one speed gear, in different modes and speed gears, the first target rotational speed obtained based on the first operation amount varies, and the second target rotational speed obtained based on the first target rotational speed varies.

Up

Rear

Right

Left

Front

Down

100

111

130

110

121

112

120

FIG. 1

FIG. 2

Left ◄――――――► Right

FIG. 3

FIG. 4

FIG. 5A

FIG. 5B

EP 4 744 937 A1

18

```
                                                               ⌐ S601
┌─────────────────────────────────────────────────────────┐
│  Acquire the first operation amount ω1 and the second operation │
│                        amount ω2                          │
└─────────────────────────────────────────────────────────┘
                              │
                              ▼
              ╱─────────────────────────────────╲        ⌐ S602
      Y      ╱        Determine whether           ╲
    ◄────────    the first operation amount ω1 is equal to the
             ╲     second operation amount ω2      ╱
              ╲─────────────────────────────────╱
                              │
                              │ N
                              ▼
┌─────────────────────────────────────────────────────────┐  ⌐ S603
│  Determine the mode and gear and acquire the first limit  │
│                  rotational speed n1'                      │
└─────────────────────────────────────────────────────────┘
                              │
                              ▼
┌─────────────────────────────────────────────────────────┐  ⌐ S604
│  Convert the first operation amount ω1 and the second operation │
│                        amount ω2                          │
└─────────────────────────────────────────────────────────┘
                              │
                              ▼
┌─────────────────────────────────────────────────────────┐  ⌐ S605
│   Obtain the first target rotational speed n1" based on the first │
│  preset rotational speed n1 and the first limit rotational speed n1' │
└─────────────────────────────────────────────────────────┘
                              │
                              ▼
┌─────────────────────────────────────────────────────────┐  ⌐ S606
│  Obtain the second limit rotational speed n2' based on the first │
│                  target rotational speed n1"              │
└─────────────────────────────────────────────────────────┘
                              │
                              ▼
┌─────────────────────────────────────────────────────────┐  ⌐ S607
│  Obtain the second target rotational speed n2" based on the │
│     second preset rotational speed n2 and the second limit │
│                  rotational speed n2'                      │
└─────────────────────────────────────────────────────────┘
                              │
                              ▼
┌─────────────────────────────────────────────────────────┐  ⌐ S608
│  Drive the first traveling motor 123 based on the first target │
│  rotational speed n1" and drive the second traveling motor 124 │
│  based on the second target rotational speed n2"          │
└─────────────────────────────────────────────────────────┘
                              │
                              ▼
                        ╭──────────╮
    ────────────────────►   End    │
                        ╰──────────╯
```

FIG. 6

FIG. 7

FIG. 8

FIG. 9A

FIG. 9B

FIG. 10

## EUROPEAN SEARCH REPORT

**Application Number**

EP 25 21 1535

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H09 130920 A (YAMAHA MOTOR CO LTD) 16 May 1997 (1997-05-16) * paragraphs [0001] - [0006], [0032] - [0064] * * figures 1, 2, 4 * | 1-15 | INV. B60L3/08 B60L3/10 B60L15/10 B60L15/20 B60L50/60 B62D11/04 |
| A | JP 2008 168870 A (KANZAKI KOKYUKOKI MFG CO LTD) 24 July 2008 (2008-07-24) * paragraphs [0001], [0010], [0011], [0114], [0129] - [0132] * * figures 1, 2, 22 * | 1-15 | |
| A | US 2021/129904 A1 (MANJI YASUHIRO [JP]) 6 May 2021 (2021-05-06) * paragraphs [0004] - [0011], [0039] - [0048], [0051], [0052], [0056], [0057] * * figures 1-5 * | 1-15 | |

TECHNICAL FIELDS SEARCHED (IPC)

B60L
B62D

The present search report has been drawn up for all claims

| Place of search | Date of completion of the search | Examiner |
|---|---|---|
| The Hague | 24 March 2026 | De Tobel, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 1535

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2026

| Patent document cited in search report | | Publication date | Patent family member(s) | | Publication date |
|---|---|---|---|---|---|
| JP H09130920 | A | 16-05-1997 | JP | 3320961 B2 | 03-09-2002 |
| | | | JP | H09130920 A | 16-05-1997 |
| JP 2008168870 | A | 24-07-2008 | NONE | | |
| US 2021129904 | A1 | 06-05-2021 | EP | 3816020 A1 | 05-05-2021 |
| | | | JP | 7215987 B2 | 31-01-2023 |
| | | | JP | 2021072684 A | 06-05-2021 |
| | | | US | 2021129904 A1 | 06-05-2021 |

EPO FORM P0459

For more details about this annex : see Official Journal of the European Patent Office, No. 12/82